(19) Europäisches Patentamt
European Patent Office
Office européen des brevets

(11) **EP 3 362 279 B1**

(12) **EUROPEAN PATENT SPECIFICATION**

(45) Date of publication and mention
of the grant of the patent:
**06.11.2019  Bulletin 2019/45**

(21) Application number: **16798013.5**

(22) Date of filing: **14.10.2016**

(51) Int Cl.:
**B32B 5/20** *(2006.01)*     **B32B 5/24** *(2006.01)*

(86) International application number:
**PCT/NL2016/050708**

(87) International publication number:
**WO 2017/065611 (20.04.2017 Gazette 2017/16)**

(54) **CORE MATERIAL SUITABLE FOR USE IN A CLOSED MOLD SYSTEM, PROCESS FOR ITS PRODUCTION AND PROCESS FOR PREPARING SHAPED ARTICLE**

KERNMATERIAL ZUR VERWENDUNG IN EINEM GESCHLOSSENEN FORMSYSTEM, VERFAHREN ZU DESSEN HERSTELLUNG UND VERFAHREN ZUR HERSTELLUNG EINES FORMKÖRPERS

MATÉRIAU DE NOYAU APPROPRIÉ POUR ÊTRE UTILISÉ DANS UN SYSTÈME DE MOULE FERMÉ, SON PROCÉDÉ DE FABRICATION ET PROCÉDÉ POUR PRÉPARER UN ARTICLE FORMÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.10.2015  NL 2015614**

(43) Date of publication of application:
**22.08.2018  Bulletin 2018/34**

(73) Proprietor: **Lantor B.V.**
**3901 RG  Veenendaal (NL)**

(72) Inventors:
• **HIJMAN, Robert Johannes**
**3900 AA Veenendaal (NL)**
• **STEIJN, Ward Antonius**
**3900 AA Veenendaal (NL)**

(74) Representative: **V.O.**
**P.O. Box 87930**
**Carnegieplein 5**
**2508 DH Den Haag (NL)**

(56) References cited:
**EP-A1- 0 190 788     EP-A1- 1 403 024**
**EP-A1- 2 233 280**

**Description**

The invention is in the field of core material for use in a closed mold system in the production of fiber reinforced plastic materials. The invention is particularly directed to core materials for use in press-forming or resin transfer and autoclave molding.

Fiber-reinforced plastics are composite materials based on a polymer resin such as an epoxy, vinylester or polyester and fibers such as glass, carbon, aramid. The fibers are usually glass, carbon, aramid, or basalt. Fiber-reinforced plastics find applications in a large variety of fields such as automotive, aviation, road signs, windmills, boats, industrials parts and the like. The presence of the fibers in the polymer materials results in increased strength, stiffness, fatigue life, fracture toughness, environmental resistance, increased temperature stability, reduced weight and the like.

A core material can be incorporated in the fiber-reinforced plastics in order to reduce the amount of resin required, reduce the weight of the composite material and/or to increase the mechanical properties, such as the bending stiffness. This use of core materials is known in the art.

Fiber-reinforced plastics comprising core materials are typically manufactured manually (hand lay-up; spray-up) or by using closed mold systems for e.g. vacuum-infusion processes. Closed mold systems are preferred over the manual manufacture in view of *i.a.* reproducibility of the material properties of the product, improved surface properties, environmental consideration (less loss of resin) and reduced overall manufacturing costs because of higher production speed. To further increase the production speed when using closed mold systems, it is preferred to inject the resin under elevated pressures to reduce the time for filling the mold with the resin. Such processes are known as resin transfer molding (RTM). Pressures of 2 to 15 bar and sometimes even higher are typical pressures for use in RTM. 3-dimensional shapes may also be produced using techniques such as vacuum infusion and "RTM Light", wherein RTM Light uses typical pressures up to 2 or 3 bars.

Before the resin is injected in the closed mold system, the core material and the reinforcing fibers are placed in the mold. Since fiber-reinforced plastic products are often three-dimensionally shaped, the mold typically has a contoured surface corresponding to the shape of the article. Because the fibers and core materials are placed onto this surface, it is preferred that core material is drapable such that they conform to the contoured surface of the mold. Besides drapability, the core materials are preferably also characterized by good compression resistance (*i.e.* related to the applied pressures during the application of the core material) and by allowing fast flow of the resin through the core materials in all directions without taking up too much resin.

EP1010793 and EP1542845 describe core materials that meet the above requirements.

It was found however that when the core materials described in these documents are used under elevated pressures, such as in RTM or press forming, the core material will be compressed and thus be reduced in volume. Such pressure is only released after the mold is filled. As a result, the core material can not recuperate from the compression to regain its lost volume. Much of the beneficial effects of the core materials are thus lost by applying the pressure.

There is thus a need for a core-material that shows compression resistance under elevated pressures. However, the above-mentioned additional favorable core materials properties should not be sacrificed too much. It may be appreciated that compression resistance is particularly at odds with fast flow of the resin though the core material and may not be compatible with the preferred drapability characteristics of the core materials.

The present inventors have surprisingly found a core material that meets the above requirements. Accordingly, the present invention provides a core material, suitable for use in a closed mold system, based on at least one fibrous web containing a foam structure within and/or on the web, wherein said foam structure is formed by a plurality of members that are separated by channels, wherein the core material further comprises a hardener based on a polymer dispersion.

The core material in accordance with the present invention has a compression resistance of more than 60%, preferably more than 70% at 6 bar. The compression resistance is defined herein as the ability to resist a force that tends to crush or buckle the core material. It is measured by determining the height of the material before applying a pressure and during applying a certain elevated pressure (of *e.g.* 6 bar) perpendicular to the plane of the core material. The compression resistance at certain pressure is calculated as 100% x (height of the material at the elevated pressure)/(height of the material at atmospheric pressure).

Upon application of the core material, the resin should be able to penetrate the core material within a certain time span. The permeability can be selected in a wide range, but particularly good results have been achieved with a permeability in the plane of the material of at least $1 \times 10^{-9}$ m$^2$. For even better flow properties, the permeability is preferably at least $1.5 \times 10^{-9}$ m$^2$, more preferably at least $5 \times 10^{-9}$ m$^2$.

The permeability is largely provided by the channels, formed by the areas containing no members. The permeability (k) is defined herein according to the law of Darcy for steady flow as

$$q = \frac{k \cdot A}{\eta} \cdot \frac{\Delta \mathrm{p}}{\Delta \mathrm{x}},$$

wherein q is the resin flow in m$^3$/s, A is the total surface of the cross section through which the resin flows in m$^2$, $\eta$ is the viscosity of the resin in Ns/m$^2$, $\Delta p$ is the pressure difference in N/m$^2$ and $\Delta x$ is the distance over which the pressure difference exists and the resin flows in m. The permeability is defined in the plane of the material, that is not perpendicular to the material, but parallel to the upper and lower surface thereof.

It has surprisingly been found that the permeability of the core material in accordance with the present invention, i.e. core material comprising a hardener, is better than of core materials without the hardener present, which are e.g. known from EP1010793 and EP1542845. This is highly surprising since one would expect that the presence of additional materials in the fibrous web structure occupy passage space and thereby at least partially obstruct the flow of the resin.

Like the materials of EP1010793 and EP1542845 the core materials of the present invention have certain drapability properties. This is important when the materials are used in pre-forming, as explained in more detail below. The core materials may therefore be defined as drapable. The drapability is defined herein as the ability of the core material to conform to a contoured surface, in particular a mold. In particular a core material as defined herein is drapable, if it can be bent around a corner with a radius of 10 mm or less, without substantial irreversible deformation of the core material. This allows the material to be draped in a good way in the mold, thus enabling the production of smoothly shaped products.

Although the above defined drapability is in general sufficient for use in closed systems, in a particular embodiment of the present invention, a core material with a much better drapability may be provided, such as a drapability that allows bending around a corner with a radius of only 5 mm or less, for instance from 1-3 mm. This may be achieved by using small-sized members such as disclosed in EP1542845.

The core material in accordance with the present invention may be produced by several methods. A convenient and typical process for preparing the core material comprises introducing a foamed or foam generating material into and/or on the fibrous web using at least one binder material and setting the foam in and/or on the web by curing the binder, followed by at least partially impregnating the fibrous web with a liquid dispersion of a hardener polymer (herein also referred to as liquid polymer dispersion, liquid hardener dispersion or just liquid dispersion) and subsequently drying the obtained impregnated fibrous web.

The intermediate product obtained in the process towards the core material that is obtained after the introduction of the foamed or foam generating material into and/or on the fibrous web using at least one binder material and setting the foam in and/or on the web by curing the binder is herein also referred to as foamed and cured fibrous web.

The introduction of the foamed or foam generating material into and/or on the fibrous web using at least one binder material and setting the foam in the web by curing the binder is for instance described in EP1010793 and EP1542845. The members are made up of foam material. They can either be present partly submerged in the fibrous web, so that they stick out from the surface of the web, or they can be positioned completely on the web.

After introduction of the foamed or foam generating material and curing of the binder the subsequent step comprising the impregnation of the foamed and cured fibrous web is typically performed by a step of contacting the fibrous web with the liquid dispersion by for instance passing it through the dispersion or by spraying the liquid onto and/or into the web. The contacting step is then optionally followed by forcing out part of the liquid which was taken up by the foamed and cured fibrous web in a foulard process. For reproducible results, contacting typically includes saturating the fibrous web following by forcing the web through a foulard.

A foulard is a known device in textiles industry and typically comprises two narrowly spaced rolls that exert a pressure on both sides of a dispersion-comprising fibrous web by forcing it though the narrow space between the rolls. As a result, part of the dispersion is forced out of the foamed and cured fibrous web and the remaining dispersion is evenly distributed within the web.

The amount of liquid that is forced out of the fibrous web depends *i.a.* on the size of the narrow space between the rolls, *i.e.* the distance between the rolls, the properties of the dispersion (*e.g.* viscosity and adherence to the web). It may be advantageous to repeat the contacting step and the foulard process for better results in terms of reproducibility and liquid distribution.

After impregnation of the fibrous web with a liquid dispersion of the polymer, a subsequently drying step is performed. Drying typically takes place at elevated temperatures, such as 80 to 250 °C, preferably at a temperature from 100 to 170 °C, more preferably about 140 °C. The preferred temperature depends *i.a.* on the drying time, the porosity and material type of the fibrous web and members therein. Typical drying times are a few minutes to about an hour, preferably 1 to 30 minutes. The preferred drying time correlates to the drying temperature, but also to the wetness of the impregnated core material that requires drying and the materials used. If for example, if less liquid remains after the foulard process, less drying time may be required.

The dispersion comprises the polymer on which the hardener is based. The dispersion typically has a 10 to 80 wt.%, preferably 20 to 60 wt.%, more preferably about 40 wt.% dry solids content.

After drying of the fibrous web impregnated with the dispersion, the amount of the hardener in the core material is determined by the increased mass of the core material comprising the hardener compared to a core material without the hardener. Typical amounts of the hardener in the core material is 40 to 500 g/m$^2$/mm (weight hardener per surface area per thickness of the core material), preferably 60 to 200 g/m$^2$/mm.

For instance, typical core materials have a thickness of 2 mm and a dry weight without hardener of 135 g/m² while having a dry weight with hardener of 419 g/m². Such core material that comprises 142 g/m²/mm hardener.

As described herein above, the amount of remaining impregnated polymer dispersion (and optional cross-linker, *vide infra*) depends *i.a.* on the amount of dispersion that is forced out of the fibrous web in case a foulard process is used. It will be appreciated that the amount of hardener thus also depends *i.a.* on the amount of remaining dispersion. The polymer content in the polymer dispersion is another factor that may influence the amount of hardener.

The polymer typically comprises polyurethane, polyvinyl chloride, polyvinylidene chloride and copolymers thereof, polyvinyl acetate, partially hydrolyzed polyvinyl acetate, polyvinyl alcohol, polyvinyl pyrrolidone, polyester resin, polyester/polyurethane copolymer, vinyl acetate ethylene (VAE) copolymer, ethylene vinyl acetate (EVA) copolymer, copolymers of vinylidene chloride such as ethylene/vinyl chloride copolymer (EVC), polyacrylate (such as lower alkyl ($C_1$-$C_4$) acrylate polymer), acrylic copolymer, acrylonitrile polymer, epoxy resin, polycarboxylic acid that is optionally thermoset with a polyol, styrene maleic anhydride, styrene-butadiene rubber, or combinations thereof. Polyurethane and polyurethane ester are preferred.

The polymer can further be characterized by mechanical properties such as microhardness, 100% modulus (also known as tensile stress at 100% elongation) and tensile strength. Preferred polymers have a microhardness of more than 65° Shore A, preferably more than 70°, even more preferably more than 85°, most preferably about 95° Shore A.

In a preferred embodiment, the hardener is further based on a cross-linker that is reactive with the polymer. In this particular embodiment, the polymer dispersion and cross-linker are typically blended and simultaneously impregnated in the fibrous web. This way, the polymer will be cross-linked by the cross-linker upon drying of the impregnated fibrous web. The amount and presence of the cross-linker may influence the mechanical properties of the hardener and is thus another factor influencing the characteristics of the core material (such as compression-resistance, drapability, *etc.*, *vide supra*).

The reactivity of the cross-linker towards to the polymer depends on the chemical composition of both compounds. For instance, polyethylene may be cross-linked with organic peroxides while polyurethane (polyester) may be cross-linked with polyisocyanates. The cross-linker may comprise a mixture of compounds that are reactive with the polymer. When the polymer comprises polyurethane polyester, preferably the cross-linker is a mixture of (aliphatic) polyisocyanates. The person skilled in the art will generally know which cross-linker may be used for the polymer that is applied.

In case a cross-linker is used, the drying step after the impregnation of the fibrous web with the polymer dispersion, may also be referred to as curing of the hardener or cross-linking of the hardener polymer. Hence, simultaneous with drying the core material, cross-linking of the hardener polymer with the cross-linker may occur. However, the curing of the hardener may not be fully finished after the drying step of the material (*e.g.* after cooling down from elevated temperatures). Cross-linking (*i.e.* curing) may continue for several days and up to weeks (typically 24 hours up to 7 days) after the curing was started. However, most of the cross-linking preferably takes place during the drying step (*i.e.* most of the chemical cross-link bonds are formed during drying) such that the mechanical properties are not significantly altered after the drying. Similarly, it may be that drying step does not result in full evaporation of the liquid from the impregnated core material. Therefore, the weight of the core material may reduce significantly, even up to 60% of its weight as determined directly after the drying step. This reduction in weight may be due to further evaporation of liquid (*e.g.* originating from the polymer dispersion) and/or due to further curing of the harderer (by which *e.g.* gas molecules as $CO_2$ are liberated). This continued weight reduction may vary depending on the amount of liquid that remains after the foulard process and/or on the wt.% dry solids content of the used polymer dispersion. The drying (*i.e.* evaporation of the liquid) and the curing are typically independent processes. This means that after the drying step, independent from evaporation of the liquid, the cross-linking may or may not be finished or *vise versa.*

For sake of clarity it is noted that in case the weight of the core material further decreases after the drying step, the amount of hardener is determined - as described herein above - after a steady state (*i.e.* no more substantial weight reduction) is realized. Consequently, the amount of hardener is typically determined after a minimum of 24 hour and preferably up to 7 days after the drying step took place.

The fibrous web that can be used according to the invention will usually be a non-woven, which may be reinforced, based on conventional fibers. The manufacture of suitable non-wovens has for instance been described by Dr. H. Jörder, "Textilien auf Vliesbasis" (D.V.R. Fachbuch, P. Kepper Verlag). It is also possible to use a combination of a non-woven fibrous web with a reinforcing fabric, one within or on top of the other.

The fibers of the web are preferably selected from the group of natural fibers, glass fibers, metal fibers, ceramic fibers or synthetic fibers, such as acrylic, polyethylene, polypropylene, polyester, polyamide (aramide), carbon or polypropylene fibers and combinations thereof. More preferably the fibers are selected from the group of glass fibers, polyester fibers, polyester-polyethylene bicomponent fibers and combinations thereof. Very good results have been achieved with polyester fibers. Polyester fibers have been found to have very good adherence with the resin and tend to have a favourably low moisture content.

According to a very convenient method, the non-woven is based on a combination of polyester fibers and polyethylene-polyester bicomponent fibers (or other low temperature melting fibers or powders). These types of webs have been thermally bonded by the bicomponent fibers. By heating the web to the initial expansion temperature of the micro-spheres, which is above the melting point of the polyethylene bond, the web becomes loose and will expand easily. After expansion, and curing the final material again has its good bond, resulting in the advantageous combination of properties of the invention. At the same time the web is very easy to handle at the initial stages of the process, thanks to the thermal bonding.

The micro-spheres that may be provided in a fibrous web according to the invention preferably at least consist of a thermoplastic synthetic resin material that is solid at room temperature. Examples of suitable resins include polystyrene, styrene copolymers, polyvinyl chloride, vinyl chloride copolymers, vinylidene chloride copolymers and so forth.

In expandable micro-spheres, usually a blowing agent has been incorporated. The presence of this blowing agent is responsible for an expansion of the micro-spheres when a fibrous web, comprising the micro-spheres, is cured. Thus, the micro-spheres are pressed into the fibrous web in unexpanded form, for example by means of a paste, such as a foam paste. The blowing agent may be a chemical or physical blowing agent, such as azodicarbonamide, isobutane, isopentane, pentane, freon, iso-octane etcetera.

The micro-spheres advantageously have a diameter of 4-40 $\mu$m in unexpanded state, and a diameter of preferably 10-120 $\mu$m in expanded state. After expansion of the micro-spheres, the amount thereof in the web is in general 10 to 60 vol.%. This amount depends on the amount of micro-spheres used and the degree of expansion thereof.

Suitable binders in this regard are for instance lower alkyl acrylate polymer, styrene-butadiene rubber, acrylonitrile polymer, polyurethane, epoxy resins, polyvinyl chloride, polyvinylidene chloride, and copolymers of vinylidene chloride with other monomers, polyvinyl acetate, partially hydrolyzed polyvinyl acetate, polyvinyl alcohol, polyvinyl pyrrolidone, polyester resins, and so forth. Optionally these binders can be provided with acidic groups, for example by carboxylating the binders. A suitable carboxylating agent is, for example, maleic anhydride. In addition, the binder, paste-like composition optionally contains water, surfactants, foam stabilizers, fillers and or thickeners, as has been described in EP-A-0 190 788.

Preferably the fibrous web containing a foam structure has a free volume of less than 80 vol.%, more preferably of 35-70 % by volume. In this respect the free volume is understood to mean the volume of the material that can be accessed by resin. The remainder of the volume will be formed by the members (and some fibers).

A preferred web comprises at least 20 wt.% of fibers and up to 80 wt.% of binder material, which is optionally foamed (weight percentages refer to the weight prior to impregnation with the polymer dispersion hardener). The closed cell foam structure forming the members can be prepared from (optionally expandable) micro-spheres which are introduced into the web using an optionally foamed binder material.

Good results have been obtained with a core material containing micro-spheres having an activation temperature of at least 120 ºC, wherein the free volume in the web is at most 80 vol.%. The web may be mechanically, physically or chemically bonded.

Much preferred is a core material comprising at least 30 wt.% of fibers, up to 70 wt.% binder material, optionally also containing expandable micro-spheres. In practice the amount of expandable micro-spheres will generally be less than 15 wt. %, preferably 1-10 wt % based upon the total weight of the core material.

Preferably the micro-spheres are expandable and more preferably they have an activation temperature of at least 120 ºC.

Very good results have been achieved with a core material wherein expanded thermoplastic micro-spheres, e.g. of a thermoplastic polymer based on an alkylmethacrylate, such as methyl methacrylate, acetonitrile, such as polyacetonitrile(PAN), vinylidene chloride or a combination thereof, are present in the web, said micro-spheres having an initial expansion temperature below the curing temperature of the binder. Micro-spheres are commercially available, e.g. Expancel™ by AKZO-NOBEL.

The core material of the invention may be prepared using techniques known for producing the prior art core materials for the manual production of fiber reinforced plastic materials. The preparation may for example be based upon the methodology as described in EP 1 010 793. Preferably the material is made by rotary screen printing.

In a preferred method to produce a core material, expandable micro-spheres are introduced into a fibrous web, using a binder material, followed by expanding the micro-spheres and curing the binder before impregnating the web with the polymer hardener dispersion. In a much preferred method the micro-spheres start to expand at a temperature below the curing temperature of the binder material.

However, in an alternative embodiment, it may actually be preferred that micro-spheres are used that start to expand on or around the curing temperature of the binder material. In such embodiment, the binder and/or the fibrous web show a certain thermoplastic behavior to accommodate this late expansion of the micro-spheres. Micro-spheres that expand at a higher temperature, are typically characterized by a better resistance to high temperature such that the resulting core material can be applied with thermoplastic composite resins for the production of thermoplastic composite articles. For this particular embodiment, the micro-spheres therefore typically expand at a temperature of 210 to 275 °C, preferably 225 to 245 °C.

The present invention further relates to a laminate at least consisting of a core material according to the invention, laminated with at least one fibrous fleece. The laminate may be formed in any way, and preferably by stitching or gluing the at least one fleece to one or both sides of the core material. Suitable methods of forming the laminate are known in the art.

An advantage of providing a laminate is the ease of use. A laminate allows easy placement of the combination of core material and fleeces in one step. Thus the manufacturer of a composite does not have to staple different layers (e.g. respectively bottom fleece, core material, top fleece) into the mold in separate steps.

In principle any fibrous fleece suitable for preparing a composite can be used. Preferred fibrous fleeces include glass fiber fleeces, carbon fiber fleeces, polyaramide fiber fleeces and hybrids thereof, e.g. glass-carbon fiber fleeces, glass-polyaramide fiber fleeces or carbon-polyaramide fiber fleeces.

A core material according to the invention has inter alia been found very suitable to make thin laminates, whilst obtaining a surface with a highly desirable smooth appearance. For example, a laminate according to the invention may very suitably have a total thickness of 1 to 10 mm, preferably of 3 to 6 mm. Good results have inter alia been realised with a laminate of a core material with a thickness of 1-2 mm covered at both sides with a reinforcement layer, preferably reinforcement layer comprising glass fiber, preferably having a thickness of approximately 0.4-0.8 mm, e.g. a glass fleece of approx. 225-600 $g/m^2$, typically about 450 $g/m^2$. Thus a laminate can be obtained with a thickness of about 2-3 mm, which laminate has been found to have a very good surface quality after being cured with a resin, in particular with an epoxy resin.

A further aspect of the present invention is a process for preparing a shaped article comprising placing the core material or the laminate in accordance with the present invention in a closed mold, introducing a liquid resin into the mold and curing the resin to produce the article.

Preferably, the member in the fibrous web are arranged and have sizes in accordance with EP1542845. Such arrangement and sizes are beneficial for the visual appearance of the core material when applied.

Surprisingly, it was found that the present invention is even better than known core materials from EP1010793 in terms of visual appearance, viz. the inventors found that the articles show even less "print" or "print-through", and the visual appearance of the articles is near to, or even comparable to the articles known form EP1542845. "Print" or "print-through" is an effect whereby the pattern the core materials (caused by the members and channels) remains visible in the laminate or product thereof, even through the layers of e.g. glass fibers and gel coating. Such an effect is known in the art and is mainly caused by shrinkage of the resin upon curing. Since more resin is present in and near the channels than near the members the absolute shrinkage (and reduced thickness) near the channels is higher than near the members resulting in a slight unevenness in thickness.

Without wishing to be bound by theory, the inventors believe that the improved visual appearance may be the result of the fact that the fibers of the fibrous web may be coated with the hardener which results in a more rigid fibrous structure at a micro level. This stronger micro structure may slow down or even lessen the shrinkage of the resin such that the overall difference in thickness is less. An alternative theory may be that the fibers in the fibrous web are partially coagulated in the Z-direction (i.e. the direction perpendicular to the plane of the core material) such that the core material may partially shield the resin below the materials from the resin above the material. These - by the core material separated - sections of resin individually may contain less resin than when the resin would be present and fully connected through the (channels of) the core materials which may lead to less shrinkage.

Suitable liquid resins for impregnating a fibrous web according to the invention are any synthetic plastic materials that can be applied in liquid form and be cured. Examples are polyester resins, phenylester resins, polyurethane resins, phenol resins, melamine formaldehyde resins and epoxy resins. Given the specifications of a shaped article to be manufactured, a skilled artisan will be able to suitably select an appropriate resin. Typical resins are cured by the addition of a curing agent. Suitable curing agents for use in a method according to the invention are any curing agents which can be used to cure the chosen liquid resin. These systems are known to the skilled person. It belongs to the standard knowledge of the person skilled in the art to be able to combine resin and curing agents so as to obtain optimum results.

The core material in accordance with the present invention is suitable for preparing a shaped article over a large pressure range. The core material may therefore in particular be used in a process for preparing a shaped article wherein the core material is exposed to pressures of 2 to 20 bar, preferably to a pressure of 3 to 10 bar. Such a process may for instance be resin transfer molding (RTM), reaction injection molding, vacuum assisted resin injection and the like, but also press-forming.

The core material may in particular be used in a processes wherein the resin is introduced into the material at a pressure of 2 to 20 bar, preferably at a pressure of 3 to 10 bar. Hence, the process for preparing a shaped article typically includes a RTM step, a press-forming step or an autoclave step under elevated pressures.

In these processes an article, for instance a pre-form article, such as a pre-form fiber-reinforced product, may first be produced without having to have or even approach the desired final shape and constituents. Such an article may be prepared in a variety of processes such as RTM, vacuum injection, thermoforming, and the like. The resulting (pre-form) article is then pressed under pressure and optionally at elevated temperature to the desired final product or article. Since thermoforming takes place under elevated pressures, core materials used in these processes preferably offer good compression-resistance to prevent cracking or other undesired deformation of the article during the thermoforming. The present invention gives thermoplastic properties and/or higher stiffness to the core material, which allows it to retain a shape indefinitely at room temperature after thermoforming. The core material in accordance with the present invention may thus also advantageously be used in thermoforming.

An other known processes to form a shaped article from materials such as fiber-reinforced materials is press-forming. For a press-forming process, a pre-form article (*e.g.* a sheet pre-form fiber-reinforced product), which does not yet have the desired final shape, is first produced. Such pre-form article may be prepared in a variety of processes, with or without applying pressure. After the formation of the pre-form article, the article is typically pressed under elevated pressure and/or temperatures to a desired shape.

Since press-forming typically takes place under elevated pressures, core materials used in these processes is preferably offer good compression-resistance to prevent cracking or other undesired deformation of the article during the press-folding. The core material in accordance with the present invention may thus also advantageous be used in press-forming.

In another method of press-forming, an article with the desired final shape can be produced in a single process step (*i.e.* a process without preparing a preform). Such a press-forming process may be used when the resin is based on thermoplastic polymers (*e.g.* to create a thermoplastic article) and may therefore be referred to as a thermoplastic press-forming process. Because of the deformation (drapability) properties of the core material in accordance with the present invention, the core material can be applied in a thermoplastic press-forming process to create an article of the desired final shape, thus creating a fiber-reinforced (thermoplastic) product in a single step.

It was found that an additional advantage of the present invention is that the used polymer comprised in the dispersion may have some thermoplastic properties. As such, the hardener may also have thermoplastic properties such that the core material can (typically under elevated temperatures of 100 °C to 220 °C, more typically 120 °C - 180 °C) be shaped to a pre-form article as such (*i.e.* pre-form core material). This pre-form core material can be used in further processes to create the final shaped article. This can be done with a variety of processes such as RTM, vacuum infusion, hand-layup, (thermoplastic) over-molding, injection molding and the like. Hence, in a particular embodiment, a shaped article may also be obtained from shaped-article production processes under low pressure (*e.g.* lower than 2 bar such as about atmospheric pressure). Another embodiment of the present invention is thus a process for preparing a shaped article comprising pre-forming the core material to a pre-form core material and applying a resin to the pre-form core material.

The invention may be illustrated with the following examples.

Example 1

Typical core materials consisting of a fibrous web with foam members, as described in EP1010793 and EP1542845 are supplied by Lantor BV under the brandname Soric®.

Two samples of XF2 and two samples of TF1.5 type non-impregnated materials were contacted with a hardener liquid dispersion by passing the materials through a liquid dispersion comprising a polyurethane having a microshore hardness of 95° Shore A and approx. 5% (wet-to-wet) of polyisocyanate crosslinker. The samples were subsequently passed through a foulard at different pressures to vary the impregnation dosage: a relative high pressure and a relative low pressure. All samples were fed twice through dip-pan and the foulard for better reproducibility and liquid distribution. The resulting samples were dried in a laboratory stove for 10-20min at 140 °C.

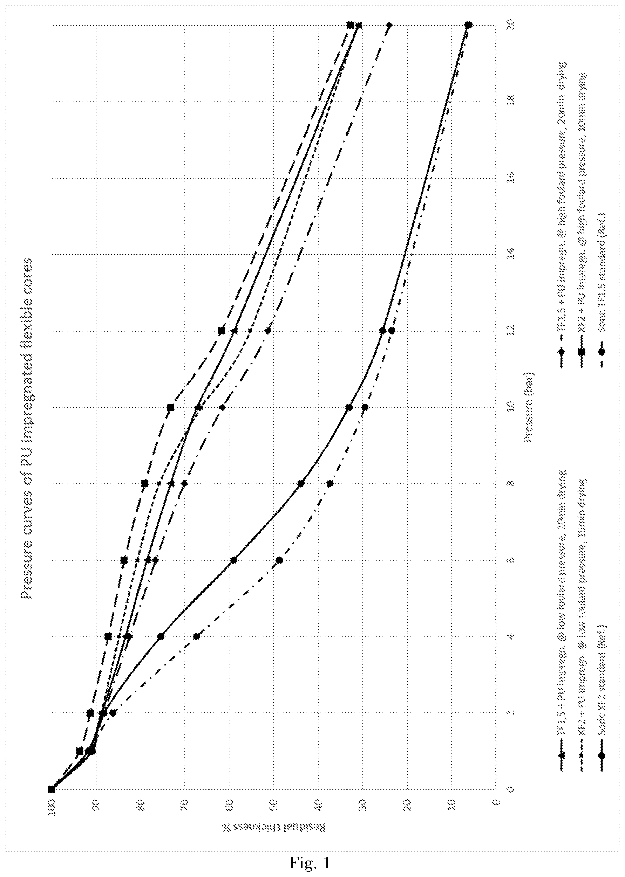

The dried samples were subjected to a compression test from 0 to 20 bar, using a universal testing machine from Zwick Roell AG. The residual thickness of the sample at each measuring point is calculated to % of its original thickness and plotted to the pressure. Results are provided in Figure 1.

Example 2

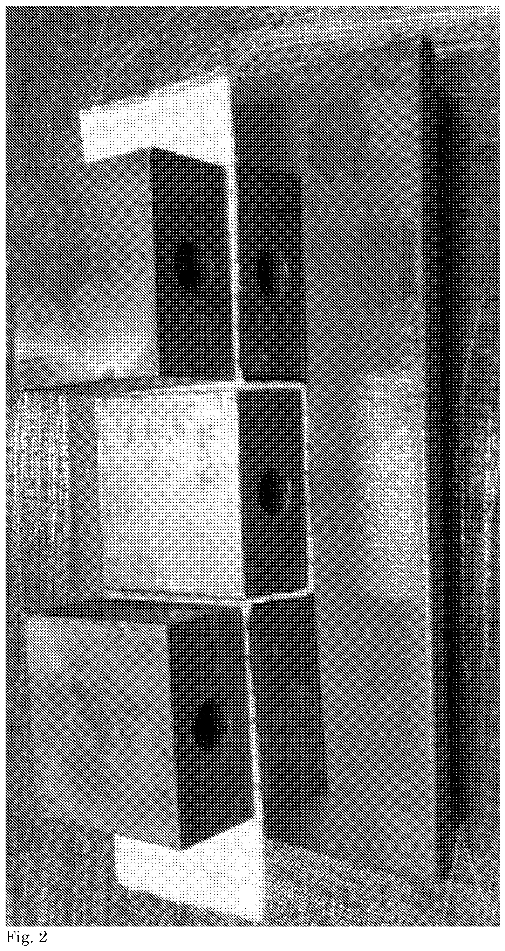

A core material obtained according to example 1 is cut in ± 5x30 cm dimensions and placed between (150 °C pre-heated) steel blocks to form a shape with four 90° angle corners (see Figure 2).

This setup was placed a few minutes at 150 °C in a laboratory stove. After this, the set-up was cooled down. When sufficiently cooled down, the steel blocks were removed.

For comparison, the process was performed with standard, non-impregnated Soric® XF2 as described in EP1542845 and commercially available from by Lantor BV.

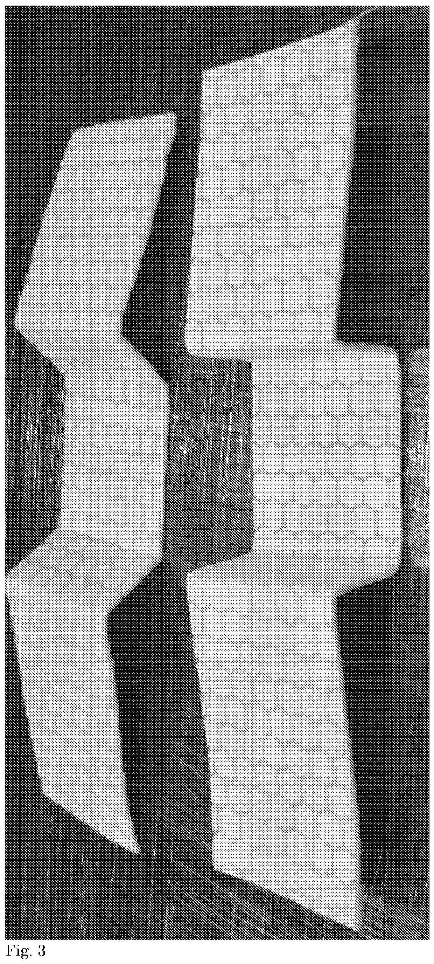

Figure 3 shows the result for the impregnated version (front sample) and the non-impregnated reference sample Soric® XF2 (back sample). The impregnated sample essentially fully retains the 90 ° angle corners, whereas the standard product shows significant flatting out.

## Claims

1. Core material, suitable for use in a closed mold system, based on at least one fibrous web containing a foam structure within and/or on the web, wherein said foam structure is formed by a plurality of members that are separated by channels, wherein the core material further comprises a hardener based on a polymer dispersion, wherein the core material has a compression resistance of more than 60% at 6 bar.

2. Core material in accordance with claim 1 having a permeability for resin of more than $1 \times 10^{-9}$ m$^2$ and a compression resistance of more than 70% at 6 bar.

3. Core material in accordance with claim 1 or 2, wherein the polymer has a microhardness of more than 65°, preferably more than 85°, most preferably about 95° Shore A.

4. Core material in accordance with any of the previous claims wherein the polymer dispersion comprises polyurethane, polyvinyl chloride, polyvinylidene chloride and copolymers thereof, polyvinyl acetate, partially hydrolyzed polyvinyl acetate, polyvinyl alcohol, polyvinyl pyrrolidone, polyester resin, polyester /polyurethane copolymer, vinyl acetate ethylene (VAE) copolymer, ethylene vinyl acetate (EVA) copolymer, copolymers of vinylidene chloride such as ethylene/ vinyl chloride copolymer (EVC), polyacrylate (in particular lower alkyl ($C_1$-$C_4$) acrylate polymer), acrylic copolymer, acrylonitrile polymer, epoxy resin, polycarboxylic acid that is optionally thermoset with a polyol, styrene maleic anhydride, styrenebutadiene rubber, or combinations thereof.

5. Core material in accordance with any of the previous claims, wherein the hardener is based on the polymer dispersion and a cross-linker that is reactive with the polymer.

6. Core material in accordance with any of the previous claims, wherein the hardener is based on a polymer dispersion comprising polyurethane and on a cross-linker comprising polyisocyanates.

7. Core material in accordance with any of the previous claims, wherein at least part of the members comprises micro-spheres.

8. Process for preparing the core material according to any of the previous claims comprising introducing a foamed or foam generating material into a fibrous web using at least one binder material and setting a foam in the web by curing the binder to form a foam structure comprising a plurality of members that are separated by channels, followed by at least partially impregnating the fibrous web with a liquid dispersion of a polymer and subsequently drying the obtained impregnated fibrous web.

9. Process according to claim 8, wherein the step of partially impregnating the fibrous web with the liquid dispersion includes contacting the fibrous web with the liquid dispersion and subsequently forcing the web through a foulard.

10. Laminate comprising a core material according to any of the claims 1-7 that is laminated with at least one fibrous fleece or reinforcement.

11. Process for preparing a pre-form core material comprising exposing the core material according to any of claims 1-7, to a vacuum or to a pressure of 2 to 20 bar, and optionally simultaneously to a temperature of 100-180 °C, to shape said core material into the shape of the pre-form core material.

12. Process for preparing a shaped article comprising applying a resin to a pre-form core material obtainable from a process according to claim 11 and curing the resin to produce the article.

13. Process for preparing a shaped article comprising placing a core material according to any of claims 1-7 or a laminate according to claim 10 in a closed mold, introducing a liquid resin into the mold and curing the resin to produce the article.

14. Process according to claim 12, wherein the liquid resin is introduced into the mold at a pressure of 2 to 20 bar, preferably at a pressure of 3 to 10 bar.

15. Shaped article obtainable by a method according to any of claims 12-14.

## Patentansprüche

1. Kernmaterial, geeignet zur Verwendung in einem geschlossenen Formsystem, basierend auf wenigstens einem Fasergewebe, enthaltend eine Schaumstruktur innerhalb und/oder auf dem Gewebe, wobei die Schaumstruktur durch eine Vielzahl von Elementen gebildet wird, die durch Kanäle getrennt sind, wobei das Kernmaterial ferner einen Härter basierend auf einer Polymerdispersion umfasst, wobei das Kernmaterial eine Druckfestigkeit von mehr als 60 % bei 6 bar hat.

2. Kernmaterial nach Anspruch 1 mit einer Durchlässigkeit für Harz von mehr als $1 \times 10^{-9}$ m$^2$ und eine Druckfestigkeit von mehr als 70 % bei 6 bar.

3. Kernmaterial nach Anspruch 1 oder 2, wobei das Polymer eine Mikrohärte von mehr als 65°, vorzugsweise mehr als 85°, am bevorzugtesten etwa 95° Shore A hat.

4. Kernmaterial nach einem der vorhergehenden Ansprüche, wobei die Polymerdispersion Polyurethan, Polyvinylchlorid, Polyvinylidenchlorid und Copolymere davon, Polyvinylacetat, teilweise hydrolysiertes Polyvinylacetat, Polyvinylalkohol, Polyvinylpyrrolidon, Polyesterharz, Polyester/PolyurethanCopolymer, Vinylacetat-Ethylen (VAE) Copolymer, Ethylenvinylacetat (EVA) - Copolymer, Copolymere von Vinylidenchlorid wie Ethylen/Vinylchlorid-Copolymer (EVC), Polyacrylat (insbesondere Niederalkyl ($C_1$-$C_4$) Acrylatpolymer), Acrylkopolymer, Acrylnitrilpolymer, Epoxidharz, Polycarbonsäure, die optional mit einem Polyol, Styrol-Maleinsäureanhydrid, Styrol-Butadien-Kautschuk oder Kombinationen davon duroplastisch ist.

5. Kernmaterial nach einem der vorhergehenden Ansprüche, wobei der Härter auf der Polymerdispersion und einem Vernetzer, der mit einem Polymer reaktiv ist, basiert.

6. Kernmaterial nach einem der vorhergehenden Ansprüche, wobei der Härter auf einer Polymerdispersion, umfassend Polyurethan, und auf einem Vernetzer, umfassend Polyisocyanate, basiert.

7. Kernmaterial nach einem der vorhergehenden Ansprüche, wobei wenigstens ein Teil der Elemente Mikro-Kugeln umfasst.

8. Verfahren zum Herstellen des Kernmaterials nach einem der vorhergehenden Ansprüche, umfassend Einbringen eines geschäumten oder schaumerzeugenden Materials in ein Fasergewebe unter Verwendung wenigstens eines Bindemittelmaterials und Einführen eines Schaums in das Gewebe durch Härten des Bindemittels, um eine Schaumstruktur, umfassend eine Vielzahl von Elementen, die durch Kanäle getrennt sind, zu bilden, gefolgt von wenigstens teilweisem Imprägnieren des Fasergewebes mit einer flüssigen Dispersion eines Polymers und anschließendem Trocknen des erhaltenen imprägnierten Fasergewebes.

9. Verfahren nach Anspruch 8, wobei der Schritt des teilweisen Imprägnierens des Fasergewebes mit der flüssigen Dispersion Inkontaktbringen des Fasergewebes mit der flüssigen Dispersion und anschließendes Treiben des Gewebes durch ein Foulard einschließt.

10. Laminat, umfassend ein Kernmaterial nach einem der Ansprüche 1-7, das mit wenigstens einem Faservlies oder Verstärkung laminiert ist.

11. Verfahren zum Herstellen eines Vorform-Kernmaterials, umfassend Aussetzen des Kernmaterials nach einem der Ansprüche 1-7 einem Vakuum oder einem Druck von 2 bis 20 bar, und optional gleichzeitig einer Temperatur von 100-180 °C, um das Kernmaterial in die Form des Vorform-Kernmaterials zu formen.

12. Verfahren zum Herstellen eines geformten Gegenstands, umfassend Aufbringen eines Harzes auf ein Vorform-Kernmaterial, erhältlich von einem Verfahren nach Anspruch 11, und Härten des Harzes, um den Gegenstand herzustellen.

13. Verfahren zur Herstellung eines geformten Gegenstands, umfassend Platzieren eines Kernmaterials nach einem der Ansprüche 1-7 oder eines Laminats nach Anspruch 10 in eine geschlossene Form, Einbringen eines flüssigen Harzes in die Form und Härten des Harzes, um den Gegenstand herzustellen.

14. Verfahren nach Anspruch 12, wobei das flüssige Harz in die Form bei einem Druck von 2 bis 20 bar, vorzugsweise bei einem Druck von 3 bis 10 bar, eingebracht wird.

15. Gestalteter Gegenstand, erhältlich durch ein Verfahren nach einem der Ansprüche 12-14.

**Revendications**

1. Matériau de noyau, adapté pour utilisation dans un système de moule fermé, sur la base d'au moins une bande fibreuse contenant une structure de mousse dans et/ou sur la bande, dans lequel ladite structure de mousse est formée d'une pluralité d'éléments qui sont séparés par des canaux, le matériau de noyau comprenant en outre un durcisseur basé sur une dispersion de polymère, le matériau de noyau ayant une résistance à la compression supérieure à 60 % à 6 bar.

2. Matériau de noyau selon la revendication 1 ayant une perméabilité pour la résine supérieure à 1 x 10$^{-9}$ m$^2$ et une résistance à la compression supérieure à 70 % à 6 bar.

3. Matériau de noyau selon la revendication 1 ou 2, dans lequel le polymère a une microdureté supérieure à 65°, de préférence supérieure à 85°, de manière préférée entre toutes d'environ 95° Shore A.

4. Matériau de noyau selon l'une quelconque des revendications précédentes, dans lequel la dispersion de polymère comprend un polyuréthane, un poly(chlorure de vinyle), un poly(chlorure de vinylidène) et des copolymères de ceux-ci, un poly(acétate de vinyle), un poly(acétate de vinyle) partiellement hydrolysé, un alcool polyvinylique, une polyvinylpyrrolidone, une résine polyester, un copolymère polyester / polyuréthane, un copolymère acétate de vinyle-éthylène (VAE), un copolymère éthylène-acétate de vinyle (EVA), des copolymères de chlorure de vinylidène tels qu'un copolymère éthylène / chlorure de vinyle (EVC), un polyacrylate (en particulier un polymère d'acrylate d'alkyle inférieur en $C_1$-$C_4$), un copolymère acrylique, un polymère d'acrylonitrile, une résine époxy, un poly(acide carboxylique) qui est facultativement thermodurci avec un polyol, styrène-anhydride maléique, un caoutchouc styrène-butadiène, ou des combinaisons de ceux-ci.

**5.** Matériau de noyau selon l'une quelconque des revendications précédentes, dans lequel le durcisseur est basé sur la dispersion de polymère et un agent de réticulation qui est réactif avec le polymère.

**6.** Matériau de noyau selon l'une quelconque des revendications précédentes, dans lequel le durcisseur est basé sur une dispersion de polymère comprenant un polyuréthane et sur un agent de réticulation comprenant des polyisocyanates.

**7.** Matériau de noyau selon l'une quelconque des revendications précédentes, dans lequel au moins une partie des éléments comprend des microsphères.

**8.** Procédé de préparation du matériau de noyau selon l'une quelconque des revendications précédentes comprenant l'introduction d'un matériau expansé ou générateur de mousse dans une bande fibreuse en utilisant au moins un matériau liant et la fixation d'une mousse dans la bande par durcissement du liant pour former une structure de mousse comprenant une pluralité d'éléments qui sont séparés par des canaux, suivie de l'imprégnation au moins partielle de la bande fibreuse avec une dispersion liquide d'un polymère, puis le séchage de la bande fibreuse imprégnée obtenue.

**9.** Procédé selon la revendication 8, dans lequel l'étape d'imprégnation partielle de la bande fibreuse avec la dispersion liquide comprend la mise en contact de la bande fibreuse avec la dispersion liquide, puis le passage forcé de la bande à travers un foulard.

**10.** Stratifié comprenant un matériau de noyau selon l'une quelconque des revendications 1 à 7, qui est stratifié avec au moins un molleton ou renforcement fibreux.

**11.** Procédé de préparation d'un matériau de noyau de préforme comprenant l'exposition du matériau de noyau selon l'une quelconque des revendications 1 à 7, à un vide ou à une pression de 2 à 20 bar, et facultativement, simultanément à une température de 100 à 180 °C, pour modeler ledit matériau de noyau dans la forme du matériau de noyau de préforme.

**12.** Procédé de préparation d'un article modelé comprenant l'application d'une résine sur un matériau de noyau de préforme pouvant être obtenu par un procédé selon la revendication 11 et le durcissement de la résine pour produire l'article.

**13.** Procédé de préparation d'un article modelé comprenant le placement d'un matériau de noyau selon l'une quelconque des revendications 1 à 7 ou d'un stratifié selon la revendication 10 dans un moule fermé, l'introduction d'une résine liquide dans le moule et le durcissement de la résine pour produire l'article.

**14.** Procédé selon la revendication 12, dans lequel la résine liquide est introduite dans le moule à une pression de 2 à 20 bar, de préférence à une pression de 3 à 10 bar.

**15.** Article modelé pouvant être obtenu par un procédé selon l'une quelconque des revendications 12 à 14.

Fig. 1

Fig. 2

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1010793 A

- EP 1542845 A
- EP 0190788 A